# EUROPEAN PATENT APPLICATION

(11) **EP 4 553 939 A1**
(43) Date of publication of application: **14.05.2025**
(21) Application number: 24180744.5
(22) Date of filing: 07.06.2024
(51) Int. Cl.: H01M 10/04, H01M 50/289, H01M 50/264

(54) **SECONDARY BATTERY MODULE**

(30) Priority: 09.11.2023 KR 20230154217
(71) Applicant: Samsung SDI Co., Ltd., Yongin-si, Gyeonggi-do 17084 (KR)
(72) Inventor: Lee, Hyun-Ye, 17084 Yongin-Si, Gyeonggi-do (KR); Oh, Seryong, 17084 Yongin-Si, Gyeonggi-do (KR); Lee, Youngjin, 17084 Yongin-Si, Gyeonggi-do (KR); Jeon, Du Seong, 17084 Yongin-Si, Gyeonggi-do (KR)
(74) Representative: Gulde & Partner

(57) **Abstract**

A secondary battery module includes: a cell stack including a plurality of unit cells; a first compression pad arranged between adjacent ones of the unit cells; and a pair of end plates facing each other at outer sides of the cell stack.

## Description

### BACKGROUND

### 1. Field

Aspects of embodiments of the present disclosure relate to a secondary battery module.

### 2. Description Of Related Art

Different from primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for, as some examples, driving motors in hybrid vehicles and electric vehicles and for storing power (e.g., home and/or utility scale power storage). A secondary battery generally includes an electrode assembly including a positive electrode and a negative electrode, a case accommodating the same, and electrode terminals connected to the electrode assembly.

Secondary battery cells have a characteristic of expanding and contracting according to the external environment, charging and discharging conditions, and so on. Furthermore, an appropriate pressure should be applied to the secondary battery cells for optimal performance and lifespan. However, when a pressure higher than an appropriate pressure is applied to the secondary battery cells, the electrode plates within the second battery cells may crack, which may reduce electrical conductivity, and problems, such as delamination and capacity reduction due to lithium plating may occur. Furthermore, when a pressure lower than an appropriate pressure is applied to the secondary battery cells, regions of the negative electrodes may be uncharged or an increase in contact resistance may occur due to lifting (or separating) of the electrode plates.

Therefore, an appropriate pressure should be applied to the secondary battery cells, and a maximum deformation of the secondary battery modules should be limited to the allowable displacement of the can and cap (e.g., cap plate) of the secondary battery cells. Furthermore, to prevent interference with the secondary battery pack cases or other secondary battery modules due to deformation of the secondary battery modules, the secondary battery modules should be deformed only so much that a minimum separation distance is maintained within the secondary battery packs.

The above information disclosed in this Background section is for enhancement of understanding of the background of the present disclosure, and therefore, it may contain information that does not constitute related (or prior) art.

### SUMMARY

Embodiments of the present disclosure provide a secondary battery module in which maximum deformation (or maximum deformation amount) due to expansion of unit cells is limited while an appropriate pressure is applied to the unit cells or secondary battery module.

However, the present disclosure is not limited to the above aspects and features, and other aspects and features of the present disclosure will be clearly understood by those skilled in the art from the description of the present disclosure below.

According to an embodiment of the present disclosure, a secondary battery module includes: a cell stack including a plurality of unit cells; a first compression pad arranged between adjacent ones of the unit cells; and a pair of end plates facing each other at outer sides of the cell stack.

The secondary battery module may further include a second compression pad arranged between each of the pair of end plates and the cell stack.

The first compression pad may be configured to be compressed by volume expansion due to a change in a state of charge (SOC) of the plurality of unit cells to prevent the pair of end plates from being deformed.

The first compression pad may be made of an elastic material and may be reversibly deformable.

Each of the pair of end plates may include: a central plate parallel to one surface of each of the unit cells; and an outer plate bent and extending from the central plate in a direction away from the plurality of unit cells in beginning of life (BOL) of the plurality of unit cells.

Each of the pair of end plates may have a groove formed in a bent portion between the central plate and the outer plate.

The groove may be formed in an inner surface of each of the pair of end plates.

The pair of end plates may be configured to be deformed by volume expansion due to deterioration of the plurality of unit cells and to maintain constant pressure applied to the plurality of unit cells.

The pair of end plates may be made of metal and are configured to be irreversibly deformed by volume expansion due to deterioration of the plurality of unit cells.

The central plate and the outer plate may be parallel to the one surface of each of the plurality of unit cells in end of life (EOL) (or in a end of life state) of the plurality of unit cells.

The cell stack may include a first cell stack and a second cell stack, and an elastic member may be arranged between the first cell stack and the second cell stack.

The elastic member may be configured to be compressed by volume expansion due to a change in states of charge of the first cell stack and the second cell stack to prevent the pair of end plates from being deformed.

The elastic member may include a plurality of unit disc springs.

The plurality of unit disc springs may be arranged in series or parallel to each other.

The unit disc springs arranged in series may be arranged in parallel, or the unit disc springs arranged in parallel may be arranged in series.

The elastic member may further include a variable cylinder passing through a center of each of the plurality of unit disc springs.

The variable cylinder may be configured to have a maximum compression amount to prevent the unit disc springs from being damaged.

According to another embodiment of the present disclosure, a secondary battery module includes: a first cell stack and a second cell stack, each including a plurality of unit cells; a pair of end plates facing each other respectively at outer sides of the first cell stack and the second cell stack; and an elastic member between the first cell stack and the second cell stack.

The elastic member may include a plurality of unit disc springs, and an arrangement of the plurality of unit disc springs may be determined based on at least one of a type of the plurality of unit cells, a number of the plurality of unit cells, or a maximum allowable deformation amount of the secondary battery module.

The secondary battery module may further include a pair of plates facing each other on outer sides of the elastic member and supporting the elastic member.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure and, together with the detailed description of the present disclosure, further describe aspects and features of the present disclosure. Thus, the present disclosure should not be construed as being limited to the drawings:
FIG. 1 is a perspective view of a secondary battery module according to an embodiment of the present disclosure;
FIG. 2 is a top view of a unit cell of a secondary battery module at beginning of life (BOL) according to an embodiment of the present disclosure;
FIG. 3 is a top view showing the unit cell shown in FIG. 2 at end of life (EOL);
FIG. 4 illustrates an end plate having a groove being deformed according to an embodiment of the present disclosure;
FIG. 5 shows a difference in pressure distribution applied to one surface of a unit cell according to presence or absence of a compression pad;
FIG. 6 is a graph showing a decrease in initial charging amount as the number of charging and discharging cycles of a secondary battery increases;
FIG. 7 is a top view of a secondary battery module including an elastic member according to an embodiment of the present disclosure;
FIG. 8 is a side view and a top view of a unit disc spring included in an elastic member according to an embodiment of the present disclosure;
FIG. 9 illustrates an example of an arrangement of a unit disc spring included in an elastic member according to an embodiment of the present disclosure; and
FIG. 10 illustrates an example of an elastic member in which a length of a variable cylinder changes as the elastic member is compressed according to an embodiment of the present disclosure.

### DETAILED DESCRIPTION

Hereinafter, embodiments of the present disclosure will be described, in detail, with reference to the accompanying drawings. The terms or words used in the present specification and claims are not to be narrowly interpreted in view of general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the embodiments, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average (e.g., has a uniform average value).

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to embodiments of the present disclosure includes a battery module and a pack housing having an accommodation space in which the battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of the battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space in which the battery cell is provided but is not limited thereto. In some embodiments, the cooling member may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) and may output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may communicate via a wired or wireless connection with an external device of the battery pack (e.g., a higher-level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control may have a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an open (or disconnection) occurs at even one location along the entire loop.

In the present disclosure, beginning of life (BOL) of secondary batteries may mean an initial state of a life cycle of the secondary batteries. In the beginning of life of the life cycle, secondary batteries may generally be at an optimal performance level and capacity. End of life (EOL) of secondary batteries may mean a state in which life cycles of the secondary batteries end and a desirable level of performance or capacity may no longer be provided. For example, the end of life of secondary batteries may indicate a point in time when the performance of secondary battery cells decreases to a point where it is determined that the secondary batteries are no longer suitable for their original purpose.

Swelling of secondary battery cells may mean that sizes of the secondary battery cells physically expand due to an internal chemical reaction or other factors. The degree of expansion of the secondary battery cells may change throughout life cycles of the secondary battery cells including an initial state and a terminal state. Furthermore, in the initial states of the life cycle of the secondary battery cells, the secondary battery cells may not or may only minimally expand. In this case, internal components and materials of the secondary battery cells may be undamaged and tightly packed. As secondary battery cells undergo charging and discharging cycles and age over time, the secondary battery cells may gradually expand and swell. The swelling phenomenon may be caused by several factors, such as chemical reactions, side reactions, and changes in the secondary battery electrode or electrolyte structure. As the lifespans of secondary battery cells approach a terminal state, the degree of swelling/expansion of secondary batteries may further increase. Specifically, as internal deterioration processes and irreversible changes in secondary battery cells accumulate, swelling may increase. Swelling of secondary battery cells may affect performance, safety, and overall functionality of the secondary battery cells. Furthermore, excessive expansion may cause increased pressure, mechanical stress, and damage to the secondary batteries. Therefore, to ensure safe and effective operations of secondary batteries, it is important to reduce or control expansion of the secondary battery cells.

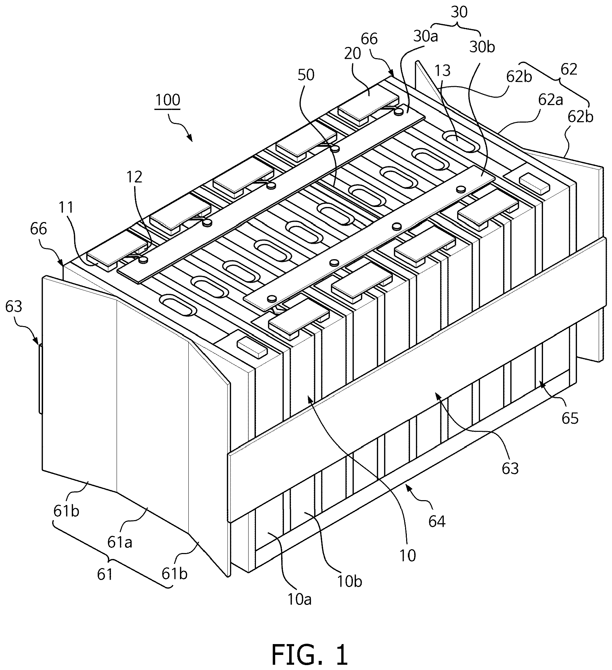

Referring to FIG. 1, a battery module 100 according to one or more embodiments of the present disclosure includes a plurality of battery unit cells 10 arranged in one direction, each including terminal units 11 and 12, a connection tab 20 connecting a unit cell 10a to an adjacent unit cell 10b, and a protection circuit module 30 having one end connected to the connection tab 20. The protection circuit module 30 may include a battery management system (BMS). Further, the connection tab 20 may include a body portion in contact with the terminal units 11 and 12 of the adjacent unit cells 10a and 10b and an extension portion extending from the body portion and connected to the protection circuit module 30. The connection tab 20 may be, for example, a bus bar.

Each unit cell 10 may include a battery case, an electrode assembly received (or accommodated) in the battery case, and an electrolyte. The electrode assembly and the electrolyte react electrochemically to store and release (e.g., generate) energy. Terminal parts 11 and 12, electrically connected to the connection tab 20, and a vent 13 as a discharge passage for gas generated inside the battery case may be provided on one side of (e.g., an upper side of) the unit cell 10. The terminal parts 11 and 12 of the unit cell 10 may be a positive electrode terminal 11 and a negative electrode terminal 12 having different polarities from each other, and the terminal parts 11 and 12 of the adjacent unit cells 10a and 10b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of unit cells is not limited to the structure shown in FIG. 1 and may be changed as desired or necessary.

Furthermore, the number and arrangement of unit cells are not limited to the structure illustrated in FIG. 1 and may be changed as desired or needed. For example, the secondary battery module 100 may include one or more cell stacks including a plurality of unit cells, and the one or more cell stacks may be separated from each other.

The unit cells 10 may be arranged in (e.g., may be stacked in) one direction so that the wide surfaces of the unit cells 10 face each other, and the unit cells 10 may be fixed by the housings 61, 62, 63, and 64. The housings 61, 62, 63, and 64 may include a pair of end plates 61 and 62 facing the wide surfaces of the unit cell 10 and arranged to face each other on the outside of the unit cells (or one or more cell stacks), and a pair of side plates 63 (only one side plate is visible in FIG. 1) and a bottom plate 64 connecting the pair of end plates 61 and 62 to each other. The side plates 63 may support side surfaces of the unit cells 10, and the bottom plate 64 may support bottom surfaces of the unit cells 10. In addition, the pair of end plates 61 and 62, the pair of side plates 63, and the bottom plate 64 may be connected by bolting, welding and/or any other suitable fastening members and methods known to those of ordinary skill in the art.

In one or more embodiments, first compression pads 65 may be arranged between the unit cells 10. Additionally or alternatively, second compression pads 66 may be disposed between each of the pair of end plates 61 and 62 and the unit cells 10. The compression pads 65 and 66 may each be made of an elastic material and may be reversibly deformable. Additionally, the compression pads 65, 66 may each include a flame retardant material and/or a cooling material. The compression pads 65, 66 may be adapted to the shape of the end plates 61, 62. For example the compression pads 65, 66 may be in contact with the end plates 61, 62 over the entire surface or essentially over the entire surface of the compression pads 65, 66 oriented towards the end plates 61, 62.

The end plates 61 and 62 may each be made of metal, such as stainless steel or aluminum, a carbon fiber material, a polymer, or a reinforced plastic.

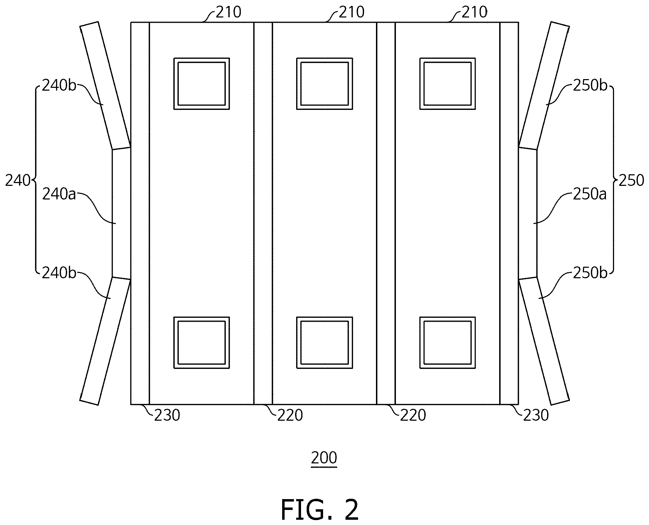

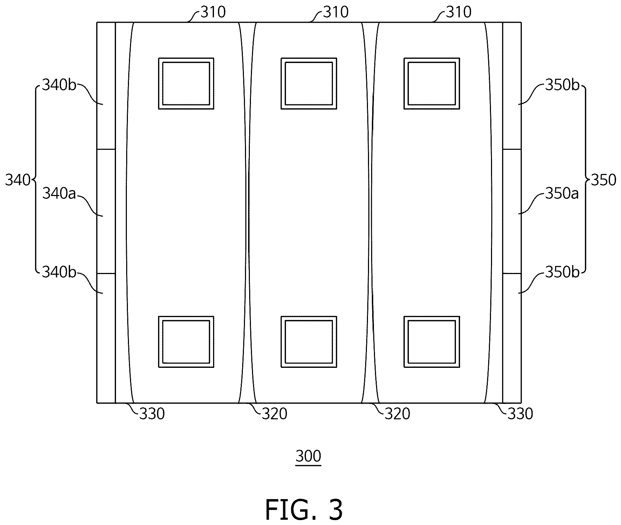

In one or more embodiments, the end plates 61 and 62 may respectively include central plates 61a and 62a arranged to be parallel to one surface (e.g., a wide surface) of the unit cell 10 and outer plate 61b and 62b bent and extending from the central plates 61a and 62a, in beginning of life (BOL) of the unit cells 10, in a direction away from the unit cells 10. Accordingly, when the unit cells 10 deform due to volume expansion caused by, for example, deterioration, the end plates 61 and 62 may consistently maintain the pressure applied to the unit cells 10 and may increase robustness by limiting the maximum amount of deformation within a certain range when swelling occurs at a high level. A process in which the end plates 61 and 62 are deformed will be described in detail below with reference to FIGS. 2 and 3.

The protection circuit module 30 may have electronic components and protection circuits mounted thereon and may be electrically connected to the connection tabs 20, to be described in more detail later. The protection circuit module 30 includes a first protection circuit module 30a and a second protection circuit module 30b extending along the direction in which the unit cells 10 are arranged in different locations, which may be, for example, a direction perpendicular to a boundary surface between adjacent unit cells 10. The first protection circuit module 30a and the second protection circuit module 30b may be spaced from each other at a suitable interval (e.g., a predetermined interval) and arranged parallel to each other to be electrically connected to adjacent connection tabs 20, respectively. For example, the first protection circuit module 30a extends along one side of the upper portion of the unit cells 10 along the direction in which the unit cells 10 are arranged, and the second protection circuit module 30b extends along the other upper side of the unit cells 10 along the direction in which the unit cells 10 are arranged. The second protection circuit module 30b may be spaced from the first protection circuit module 30a at a suitable interval (e.g., a predetermined interval) with the vents 13 interposed therebetween and may be disposed parallel to the first protection circuit module 30a. As such, the two protection circuit modules 30a and 30b are spaced from each other side-by-side along the direction in which the unit cells 10 are arranged, thereby reducing or minimizing the area of the printed circuit board (PCB) constituting the protection circuit module 30. By separately configuring the protection circuit module 30 into two protection circuit modules 30a and 30b, unnecessary PCM area is reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be, for example, an electric wire. In addition, the connection member 50 may be made of a material having elasticity or flexibility. Via the connecting member 50, it may be possible to check and manage whether the voltage, temperature, and/or current of the unit cells 10 are normal. For example, the information received by the first protection circuit module 30a from connection tabs 20 adjacent to the first protection circuit module 30a, such as voltage, current, and/or temperature, and the information received from connection tabs 20 adjacent to the second protection circuit module 30b, such as voltage, current, and/or temperature, may be integrated and managed by the protection circuit module 30 through the connection member 50.

In addition, when the unit cell 10 swells, shocks or pressure may be absorbed by the elasticity or flexibility of the connection member 50, thereby preventing the first and second protection circuit modules 30a and 30b from being damaged.

In addition, the shape and structure of the connection member 50 is not limited to the shape and structure shown in FIG. 1.

As described above, because the protection circuit module 30 is provided as the first and second protection circuit modules 30a and 30b, the area of the PCB constituting the protection circuit module is reduced or minimized, and the space inside the battery module can be improved (or secured), which improves work efficiency by facilitating fastening between the connection tab 20 and the protection circuit module 30 and repair work if (or when) an abnormality is detected in the battery module 100.

FIG. 2 is a top view of a secondary battery module 200 including unit cells 210 at beginning of life (BOL) according to embodiments of the present disclosure. The secondary battery module 200 may include one or more cell stacks including a plurality of unit cells 210, one or more first compression pads 220 arranged between the unit cells 210, and a pair of end plates 240 and 250 arranged to face each other on the outsides of one or more cell stacks. Unit cells 210 and compression pads 220 may be arranged alternately.

In one or more embodiments, the first compression pads 220 may be compressed by volume expansion according to a change in state of charge (SOC) of the unit cells 210, and thus, the end plates 240 and 250 may be prevented from being deformed. For example, the volume of the unit cells 210 may expand in a state where the unit cells 210 are fully charged (SOC 100%) compared to when the unit cells 210 are fully discharged (SOC 0%). In this case, the first compression pads 220 may be compressed by volume expansion of the unit cells 210.

In one or more embodiments, the second compression pads 230 may be arranged between each of the pair of end plates 240 and 250 and the one or more cell stacks. Accordingly, the pressure applied by the end plates 240 and 250 may be evenly transferred to one surface of (e.g., outer surfaces of) each of the unit cells 210.

The first and second compression pads 220 and 230 may each be made of an elastic material and may be reversibly deformed. For example, the first and second compression pads 220 and 230 may each be made of a material such as urethane but are not limited thereto.

The pair of end plates 240 and 250 may respectively include central plates (or central plate portions) 240a and 250a arranged to be parallel to one surface (e.g., a wide surface) of each of the unit cells 210, and outer plates (or outer plate portions) 240b and 250b bent and extending from the central plates (or central plate portions) 240a and 250a in a direction away from the unit cells 210 in the beginning of life (BOL) of the unit cells 210. In one or more embodiments, grooves may be formed in bent portions between the central plates (or central plate portions) 240a and 250a and the outer plates (or outer plate portions) 240b and 250b. In this case, the grooves may be respectively formed in inner surfaces (e.g., surfaces facing the unit cells 210) of the end plates (or end plate portions) 240 and 250. The outer plates (or outer plate portions) 240b and 250b each may form an angle with the central plate (or central plate portion) 240a and 250a. Said angle may be, for example, between 2° and 10°, or around 5°. A gap between the outer plates (or outer plate portions) 240b, 250b and the second compression pads 230 may widen from a central area to a distal area.

In one or more embodiments, bending angles between the outer plates 240b and 250b and the corresponding central plates 240a and 250a may be changed depending on the type of unit cell 210 (e.g., an all-solid-state secondary battery or a lithium-ion secondary battery), the maximum deformation amount of a secondary battery module 200, the pressure to be applied to the unit cell 210, and so on. For example, the unit cell 210 included in the secondary battery module 200 may be formed to absorb a relatively high swelling pressure by having greater bending angles when the unit cell 210 generates the higher swelling pressure. Thicknesses of the end plates 240 and 250 may also be determined according to the maximum deformation amount of the secondary battery module 200, the pressure to be applied to the unit cell 210, and so on.

Without being limited to the structure illustrated in FIG. 2, the end plates 240 and 250 may have various structures to increase robustness for limiting the maximum deformation amount within a certain range when a swelling force due to expansion occurs at a high level at the end of life (EOL) of the unit cells. For example, the end plates 240 and 250 may each be formed to have an arch shape or a dome shape or may further include plates extending from the outer plates 240b and 250b.

FIG. 3 is a top view showing a secondary battery module 300 including unit cells 310 at end of life (EOL) according to one or more embodiments of the present disclosure. Descriptions of secondary battery unit cells 310, first compression pads 320, and second compression pads 330 previously given with reference to FIG. 2 are omitted below as being repetitive.

End plates 340 and 350 may be configured to maintain constant pressure constant applied to the plurality of unit cells 310 deformed by volume expansion due to deterioration of the unit cells 310. The pair of end plates 340 and 350 may be made of metal and may be plastically deformed plates. Accordingly, the pair of end plates 340 and 350 may be irreversibly deformed due to volume expansion due to deterioration of the unit cells 310.

In the end of life (EOL) of the unit cells 310, the swelling force due to expansion of the unit cells 310 may occur at a high level. In response thereto, in the end of life of the unit cells 310, the central plates 340a and 350a and the outer plates 340b and 350b may be deformed to be parallel to one surface of each of the unit cells 310, and thus, an appropriate pressure may be continuously applied to the unit cells 310 while limiting the maximum deformation amount of the secondary battery module 300. With this configuration, the end plates 340 and 350 may provide a constant pressure from the beginning of life to the end of life of the secondary battery module 300.

In the end of life of the unit cells 310, the compression pads 320 and 330 may be compressed by volume expansion due to a change in a charging state of the unit cells 310 and may absorb the pressure applied to the end plates 340 and 350, and thus, the end plates 340 and 350 may be prevented from being deformed.

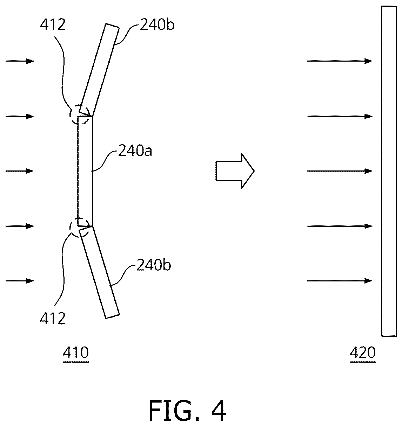

FIG. 4 illustrates an example in which an end plate 410 having a groove 412 is deformed according to one or more embodiments of the present disclosure. The end plate 410 may include a central plate 240a disposed to be parallel to one side of each of a plurality of unit cells and outer plates 240b bent and extending in a direction away from the unit cells. The end plate 410 has grooves 412 formed in bent portions between the central plate 240a and the outer plates 240b in order for the end plate 410 to be easily deformed in response to volume expansion (e.g., an external force applied in the right direction in FIG. 4) due to deterioration of the unit cells. In this case, the grooves 412 may be formed in inner surfaces of the end plate 410. The end plate 410 may represent a state of the end plate in the beginning of life (BOL) of the unit cell.

Because the grooves 412 are formed in the end plate 410, an end plate 420 deforms in response to expansion due to deterioration of the unit cells to be parallel to one side of each of the unit cells. For example, according to expansion due to deterioration of the unit cells, the central plate 240a may be moved (e.g., deformed or bent) to be parallel to an expansion direction of the unit cells (or to be parallel to one side of each of the unit cells), and the outer plates 240b connected to the central plate 240a may be moved to be parallel to one side of each of the unit cells. The deformed end plate 420 may represent a state of the end plate in the end of life (EOL) of the unit cell.

Alternatively, the end plate 410 may be deformed by forming hinges in bent portions between the central plate 240a and the outer plates 240b.

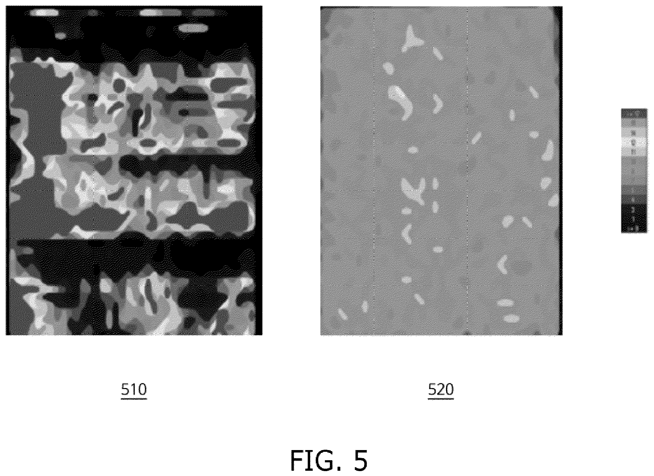

FIG. 5 shows a difference in distribution of pressure applied to one surface of the unit cell according to presence or absence of a compression pad. A first heat map 510 shows pressure distribution applied to one surface of the unit cell when compression pads are not disposed between the end plate and the unit cell and between the unit cells. A second heat map 520 shows pressure distribution applied to one surface of the unit cell when compression pads are disposed between the end plate and the unit cell and between the unit cells.

As shown in FIG. 5, in the first heat map 510, lower pressure is applied to outer edges of the unit cell, while higher pressure is applied to an inner area of the unit cell. That is, as can be seen in the first heat map 510, the pressure is not applied evenly to the unit cells. Furthermore, it can be seen in the second heat map 520 that the pressure is applied more evenly to one surface of the unit cell by using a compression pad. That is, by providing compression pads between the end plate and the unit cell and between the unit cells, the pressure may be applied evenly to one surface of the unit cell.

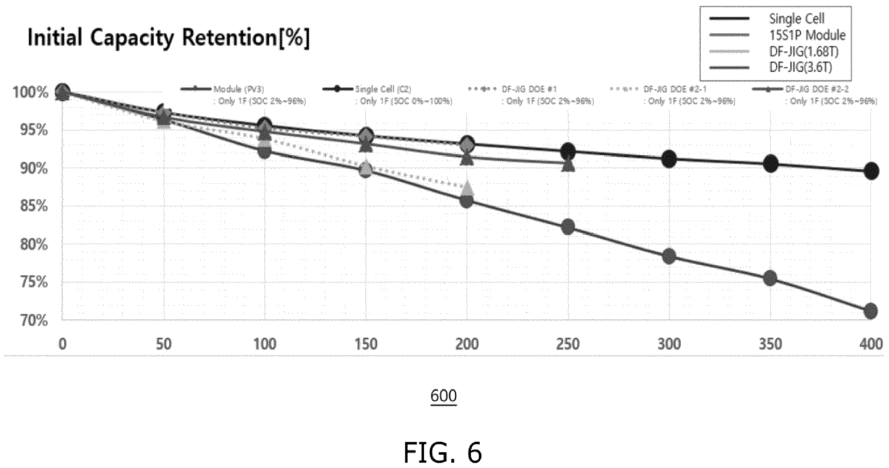

FIG. 6 is a graph 600 showing a decrease in initial charging amount as the number of charging and discharging of the secondary battery increases. It can be seen from the graph 600 that, in a state where only one cell (a single cell) is used, the deterioration of the secondary battery progresses the slowest. In addition, it can be seen that, in a state where a secondary battery module includes a plurality of secondary battery cells (15S1P Module), the deterioration of the secondary battery progresses faster compared to a case where only one cell (a single cell) is used due to expansion of the secondary battery.

In addition, in a state where a compression pad (1.68T or 3.6T) and end plate according to the present disclosure is applied to a secondary battery module including a plurality of secondary battery cells (DF-JIG(1.68T) and DF-JIG(3.6T)), it can be seen that a lifespan of the secondary battery module is greatly increased compared to the secondary battery module (15S1P Module). In addition, it can be seen that in a state where a thickness of the compression pad is increased from 1.68T (DF-JIG(1.68T)) to 3.6T (DF-JIG(3.6T)), the lifespan of the secondary battery module is further increased. That is, it can be seen that as a compression thickness of the compression pad increases, the lifespan of the secondary battery increases.

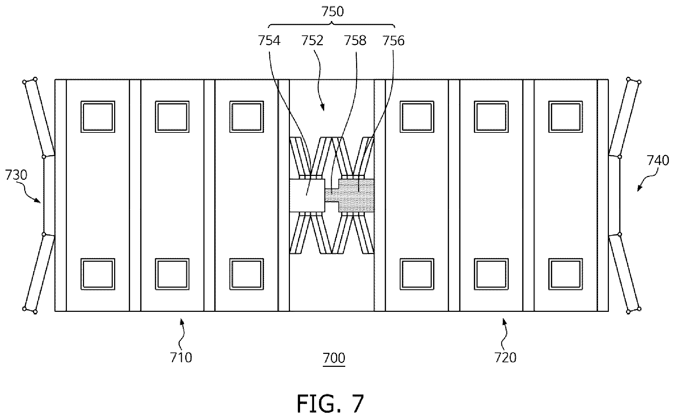

FIG. 7 is a top view of a secondary battery module 700 in which an elastic member 750 is disposed according to one or more embodiments of the present disclosure. Descriptions of end plates 730 and 740 that are the same as the previously given descriptions are omitted.

An elastic member 750 may be disposed between a first cell stack 710 including a plurality of unit cells and a second cell stack 720 including a plurality of unit cells. The elastic member 750 may be compressed by volume expansion due to a change in charging states of the first cell stack 710 and the second cell stack 720, and thus, the end plates 730 and 740 may be prevented from being deformed, and a free space required for contraction and expansion of the unit cells or the first and second cell stacks 710 and 720 may be obtained. Furthermore, the elastic member 750 may absorb the pressure due to expansion when the volume of the unit cell is greatly expanded due to a change in charging state.

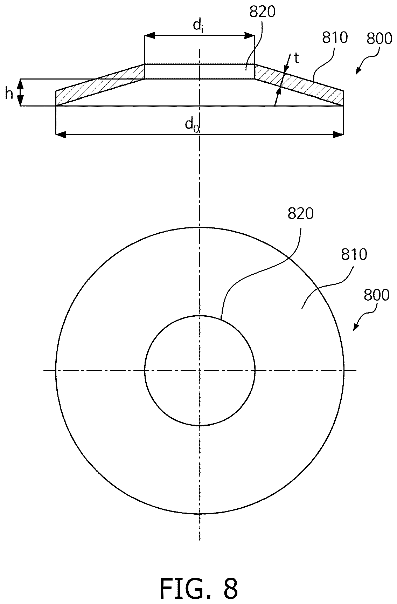

In one or more embodiments, the elastic member 750 may include a plurality of unit disc springs 752. A detailed structure of the unit disc springs 752 will be described below with reference to FIG. 8.

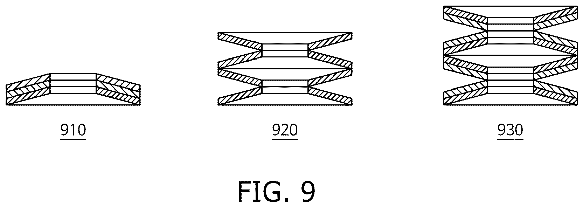

In one or more embodiments, the unit disc springs 752 may be arranged in series or parallel. The unit disc springs 752 arranged in series may be arranged in parallel, or the unit disc springs 752 arranged in parallel may be arranged in series to form the elastic member 750. Thereby, an elastic force and/or compression length of the elastic member 750 may be adjusted. This will be described in detail below with reference to FIG. 9.

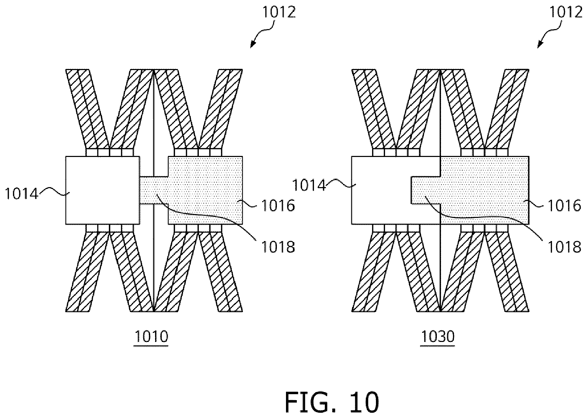

In one or more embodiments, the elastic member 750 may include variable cylinders 754 and 756 passing through the centers of the unit disc springs 752. The variable cylinders 754 and 756 may be compressed together when the unit disc springs 752 are compressed. For example, lengths of the variable cylinders 754 and 756 may be reduced by inserting a protrusion 758 formed on one side of the second variable cylinder member 756 into a hollow of the first variable cylinder member 754. This will be described in detail below with reference to FIG. 10.

Additionally, a pair of plates facing each other may be further arranged on the outside of the elastic member 750. The pair of plates facing each other may support the elastic member 750 from the outside (e.g., from outer edges or sides).

Additionally or alternatively, the elastic member 750 may be disposed between the first end plate 730 and the first cell stack 710 and/or between the second end plate 740 and the second cell stack 720.

Although FIG. 7 illustrates that the unit disc springs 752 and the variable cylinders 754 and 756 are used together, the present disclosure is not limited thereto. For example, only the unit disc springs 752 or only the variable cylinders 754 and 756 may be used.

FIG. 8 illustrates a side view and a top view showing a unit disc spring 800 included in an elastic member according to one or more embodiments of the present disclosure. A lower part of the unit disc spring 800 may have a first diameter d₀. Furthermore, a hollow (or opening) 820 formed in an upper portion of the unit disc spring 800 may have a second diameter dᵢ less than the first diameter d₀. When the unit disc spring 800 is compressed, an inclination portion 810 may be positioned on the same plane as the hollow 820.

A variable height h of the unit disc spring 800, an inclination of the inclination portion 810, and/or a thickness t of the unit disc spring 800 may be changed based on the desired performance of the elastic member disposed between the cell stacks. For example, as the variable height h increases, an elastic force of the elastic member may increase.

By using the unit disc spring 800 in an elastic member, an elastic force of the elastic member may be increased relative to the same volume compared to an embodiment in which a coil spring or the like is used.

FIG. 9 illustrates an example of first, second, and third arrangements 910, 920, and 930 of unit disc springs included in an elastic member according to one or more embodiments of the present disclosure. The first arrangement 910 represents a structure in which a plurality of unit disc springs are arranged in parallel. For example, the disc springs arranged in parallel may have the same orientation, i.e., outer surfaces of the disc springs may be parallel to each other. In this case, maximum compression distances are equal to each other compared to an embodiment in which one unit disc spring is used, but the elastic force required for compression may increase in proportion to the number of used unit disc springs.

The second arrangement 920 represents a structure in which a plurality of unit disc springs are arranged in series. For example, the disc springs arranged in series may have alternating orientations. The shape of the surface of each disc spring may then be transferred to the shape of the surface of a neighbouring disc spring by mirroring. In this embodiment, the maximum compression distances increase in proportion to the number of unit disc springs compared to the embodiment in which one unit disc spring is included, but the elastic forces required for compression may be equal to each other.

The third arrangement 930 represents a structure in which unit disc springs (or pluralities of unit disc springs) arranged in series are arranged in parallel or the unit disc springs (or pluralities of disc springs) arranged in parallel are arranged in series. In this embodiment, the maximum compression distances increase in proportion to the number of unit disc springs arranged in series, compared to the embodiment in which one unit disc spring is included, and the elastic force required for compression increases in proportion to the number of unit disc springs arranged in parallel.

The arrangement of the unit disc springs may be changed based on the desired performance of the elastic member including the unit disc spring. For example, the arrangement of the unit disc springs may be designed to correspond to the type of unit cell (e.g., an all-solid-state secondary battery or a lithium-ion secondary battery), the number of unit cells, the maximum deformation amount of the secondary battery module, the pressure to be applied to the unit cells, and so on. For example, the pressures that are anticipated to be applied to the unit cells is different for each type of the unit cells, and the pressure applied by an elastic member may be adjusted through the arrangement of the disc springs such that the corresponding pressure may be applied to the unit cells.

FIG. 10 illustrates an example in which lengths of variable cylinders 1014 and 1016 change as an elastic member 1010 is compressed according to one or more embodiments of the present disclosure. The variable cylinders 1014 and 1016 passing through the centers of a plurality of unit disc springs 1012 may include a first variable cylinder member 1014 and a second variable cylinder member 1016, and the second variable cylinder member 1016 may have a protrusion 1018. In an uncompressed elastic member 1010, the protrusion 1018 provided on one side of the second variable cylinder member 1016 may be outside of or only partially in a hollow (e.g., a hollow space) in the first variable cylinder member 1014, and lengths of the variable cylinders 1014 and 1016 may be increased.

In the compressed elastic member 1030, the protrusion 1018 provided on one side of the second variable cylinder member 1016 may be inserted into the hollow in the first variable cylinder member 1014, and lengths of the variable cylinders 1014 and 1016 may be reduced. Accordingly, the variable cylinders 1014 and 1016 may fix positions of the unit disc springs 1012, and the elastic member 1030 may be compressed by an external force.

In one or more embodiments, the maximum compression amount of the variable cylinders 1014 and 1016 may be determined to prevent the unit disc springs 1012 from being damaged. For example, a length of the protrusion 1018 (e.g., the maximum compression amount of the variable cylinders 1014 and 1016) may be less than a critical length at which the unit disc springs 1012 may be damaged.

In contrast to this, the elastic members 1010 and 1030 may be arranged on both surfaces of the unit disc springs and may include a pair of facing plates and one cylinder member, a hollow formed in one plate, at least a part of one cylinder member may be inserted into the hollow in the plate, and thereby, the length of an elastic member may be adjusted.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims.

## Claims

1. A secondary battery module (200) comprising:
a cell stack comprising a plurality of unit cells (210);
a first compression pad (220) arranged between adjacent ones of the unit cells (210); and
a pair of end plates (240, 250) facing each other at outer sides of the cell stack.

2. The secondary battery module (200) as claimed in claim 1, further comprising a second compression pad (230) arranged between each of the pair of end plates (240, 250) and the cell stack.

3. The secondary battery module (200) as claimed in claim 1 or claim 2, wherein the first compression pad (220) is configured to be compressed by volume expansion due to a change in a state of charge, SOC, of the plurality of unit cells (210) to prevent the pair of end plates (240, 250) from being deformed.

4. The secondary battery module (200) as claimed in one of claims 1 to 3, wherein the first compression pad (220) is made of an elastic material and is reversibly deformable.

5. The secondary battery module (200) as claimed in one of claims 1 to 4, wherein each of the pair of end plates (240, 250) comprises:
a central plate (240a, 250a) parallel to one surface of each of the unit cells (210); and
an outer plate (240b, 250b) bent and extending from the central plate (240a, 250a) in a direction away from the plurality of unit cells (210) in beginning of life (BOL) of the plurality of unit cells (210).

6. The secondary battery module (200) as claimed in claim 5, wherein each of the pair of end plates (240, 250) has a groove (412) formed in a bent portion between the central plate (240a, 250a) and the outer plate (240b, 250b).

7. The secondary battery module (200) as claimed in claim 6, wherein the groove (412) is formed in an inner surface of each of the pair of end plates (240, 250).

8. The secondary battery module (200) as claimed in one of claims 1 to 7, wherein the pair of end plates (240, 250) are configured to be deformed by volume expansion due to deterioration of the plurality of unit cells (210) and to maintain constant pressure applied to the plurality of unit cells (210).

9. The secondary battery module (200) as claimed in claim 8, wherein the pair of end plates (240, 250) are made of metal and are configured to be irreversibly deformed by volume expansion due to deterioration of the plurality of unit cells (210).

10. The secondary battery module (200) as claimed in one of claims 5 to 9, wherein the central plate (240a, 250a) and the outer plate (240b, 250b) are parallel to the one surface of each of the plurality of unit cells (210) in end of life (EOL) of the plurality of unit cells (210).

11. The secondary battery module (700) as claimed in one of claims 1 to 10, wherein the cell stack comprises a first cell stack (710) and a second cell stack (720), and
wherein an elastic member (750) is arranged between the first cell stack (710) and the second cell stack (720).

12. The secondary battery module (700) as claimed in claim 11, wherein the elastic member (750) is configured to be compressed by volume expansion due to a change in states of charge of the first cell stack (710) and the second cell stack (720) to prevent the pair of end plates (730, 740) from being deformed.

13. The secondary battery module (700) as claimed in claim 11 or claim 12, wherein the elastic member (750) comprises a plurality of unit disc springs (752), and
wherein the plurality of unit disc springs (752) are arranged in series or parallel to each other.

14. The secondary battery module (700) as claimed in claim 11 or claim 12, wherein the elastic member (750) comprises a plurality of unit disc springs (752), and
wherein unit disc springs (752) arranged in series are arranged in parallel, or wherein unit disc springs (752) arranged in parallel are arranged in series.

15. The secondary battery module (700) as claimed in one of claims 11 to 14, wherein the elastic member (750) comprises:
a plurality of unit disc springs (752); and
a variable cylinder (754, 756) passing through a center of each of the plurality of unit disc springs (752), and
wherein the variable cylinder (754, 756) is configured to have a maximum compression amount to prevent the unit disc springs (752) from being damaged.

## Amended claims

### Amended claims in accordance with Rule 137(2) EPC.

1. A secondary battery module (200) comprising:
a cell stack comprising a plurality of unit cells (210);
a first compression pad (220) arranged between adjacent ones of the unit cells (210); and
a pair of end plates (240, 250) facing each other at outer sides of the cell stack,
wherein the pair of end plates (240, 250) are configured to be deformed by volume expansion due to deterioration of the plurality of unit cells (210) and to maintain constant pressure applied to the plurality of unit cells (210).

2. The secondary battery module (200) as claimed in claim 1, further comprising a second compression pad (230) arranged between each of the pair of end plates (240, 250) and the cell stack.

3. The secondary battery module (200) as claimed in claim 1 or claim 2, wherein the first compression pad (220) is configured to be compressed by volume expansion due to a change in a state of charge, SOC, of the plurality of unit cells (210) to prevent the pair of end plates (240, 250) from being deformed.

4. The secondary battery module (200) as claimed in one of claims 1 to 3, wherein the first compression pad (220) is made of an elastic material and is reversibly deformable.

5. The secondary battery module (200) as claimed in one of claims 1 to 4, wherein each of the pair of end plates (240, 250) comprises:
a central plate (240a, 250a) parallel to one surface of each of the unit cells (210); and
an outer plate (240b, 250b) bent and extending from the central plate (240a, 250a) in a direction away from the plurality of unit cells (210) in beginning of life (BOL) of the plurality of unit cells (210).

6. The secondary battery module (200) as claimed in claim 5, wherein each of the pair of end plates (240, 250) has a groove (412) formed in a bent portion between the central plate (240a, 250a) and the outer plate (240b, 250b).

7. The secondary battery module (200) as claimed in claim 6, wherein the groove (412) is formed in an inner surface of each of the pair of end plates (240, 250).

8. The secondary battery module (200) as claimed in claim 1, wherein the pair of end plates (240, 250) are made of metal and are configured to be irreversibly deformed by volume expansion due to deterioration of the plurality of unit cells (210).

9. The secondary battery module (200) as claimed in one of claims 5 to 8, wherein the central plate (240a, 250a) and the outer plate (240b, 250b) are parallel to the one surface of each of the plurality of unit cells (210) in end of life (EOL) of the plurality of unit cells (210).

10. The secondary battery module (700) as claimed in one of claims 1 to 9, wherein the cell stack comprises a first cell stack (710) and a second cell stack (720), and
wherein an elastic member (750) is arranged between the first cell stack (710) and the second cell stack (720).

11. The secondary battery module (700) as claimed in claim 10, wherein the elastic member (750) is configured to be compressed by volume expansion due to a change in states of charge of the first cell stack (710) and the second cell stack (720) to prevent the pair of end plates (730, 740) from being deformed.

12. The secondary battery module (700) as claimed in claim 10 or claim 11, wherein the elastic member (750) comprises a plurality of unit disc springs (752), and
wherein the plurality of unit disc springs (752) are arranged in series or parallel to each other.

13. The secondary battery module (700) as claimed in claim 10 or claim 11, wherein the elastic member (750) comprises a plurality of unit disc springs (752), and
wherein unit disc springs (752) arranged in series are arranged in parallel, or wherein unit disc springs (752) arranged in parallel are arranged in series.

14. The secondary battery module (700) as claimed in one of claims 10 to 13, wherein the elastic member (750) comprises:
a plurality of unit disc springs (752); and
a variable cylinder (754, 756) passing through a center of each of the plurality of unit disc springs (752), and
wherein the variable cylinder (754, 756) is configured to have a maximum compression amount to prevent the unit disc springs (752) from being damaged.
